# EUROPÄISCHE PATENTANMELDUNG

(11) **EP 1 063 034 A2**
(43) Veröffentlichungstag der Anmeldung: **27.12.2000**
(21) Anmeldenummer: 00111043.6
(22) Anmeldetag: 31.05.2000
(51) Int. Cl.: B22C 1/00, B22C 7/02, B22C 9/04

(54) **Verfahren zur Herstellung von magnesiumhaltigen Metallgussteilen**

(30) Priorität: 25.06.1999 DE 19929290
(71) Anmelder: Volkswagen Aktiengesellschaft, 38436 Wolfsburg (DE)
(72) Erfinder: Geisler, Wolfgang, Dr., 38162 Weddel (DE); Schomaker-Bartling, Sven, 38464 Gr. Twülpstedt (DE)

(57) **Zusammenfassung**

Verfahren zur Herstellung von magnesiumhaltigen Metallgußteilen durch Einformen eines unter der Temperatur der einschießenden Metallschmelze verdampfbarem Konturmodell aus aufgeschäumten Kunststoff in einem Formsand von legierungsabhängiger Zusammensetzung. Es stellt sich damit die Aufgabe, ein Verfahren zu entwickeln, das es ermöglicht Legierungen mit hohem Magnesiumanteil, das heißt mit Magnesiumanteilen von über 30 bis 40 %, mit dem Verfahren der verlorenen Form zu gießen. Dies gelingt, indem der Formsand in bezug auf das zu gießende Metall frei von reaktionsfähigem Sauerstoff ist und das Material des Konturmodells frei von angekoppelten Sauerstoff ist.

## Beschreibung

Die Erfindung betrifft ein Verfahren zur Herstellung von magnesiumhaltigen Metallgußteilen gemäß dem Oberbegriff des Anspruchs 1.

Zur Herstellung von Gußteilen wird von dem zu gießenden Teil ein Modell gemacht. Dieses Modell wird in Formsand eingeformt. Der Formsand ist auf das Metall und die zu erreichende Oberfläche abgestimmt. Es gibt zwei Wege das Modell in den Formsand einzuformen. Bei dem einen wird ein Modell eingeformt und wieder entnommen, so daß im Formsand nur der Abdruck ist. Ist das Gußstück mit Hohlraum zu gießen, so muß ein dem Hohlraum entsprechender Kern aus Formsand eingelegt werden.

Bei der anderen Methode wird ein Modell, zum Beispiel aus Polystyrol, komplett in den Formsand eingeformt und verbleibt dort. Nach dem Einformen des Modells werden die auf die Modellgeometrie abgestimmten Gußkanäle geformt. Beim Gießen wird dann die Metallschmelze durch den Einguß eingefüllt und wird über den Lauf und den Anschnitt zu dem von dem Modell geformten Formsand gelenkt. Bei der ersten Methode strömt die Schmelze in den Hohlraum bis alles mit Metall gefüllt ist. Dies schließt alle für den Guß bestimmten Kanäle mit ein. Bei der zweiten Methode wird die Form durch die Hitzebeaufschlagung verdampft. Das dampfförmige Material gast durch den Speiser und den Formsand aus. Das Metall füllt die zu entstehenden Hohlräume aus. Wegen der Zerstörung der Modellform zählt die zweite Methode zu den sogenannten Gießverfahren mit verlorener Form oder in Englisch Lost-form-Verfahren.

Besteht die Modellform für das Lost-form-Verfahren aus einem formstabilen jedoch leicht verdampfbarem/verflüssigbarem aufgeschäumtem Material, so spricht man von Lost-foam-Verfahren. Zumeist kommt dafür Polystyrol zum Einsatz. Bei der Auswahl des Formmaterials ist darauf zu achten, daß diese keine größere Dichte als 20 kg/m³ hat. Kompliziert zu formende Figuren werden häufig aus einzelnen Teilen zusammengeklebt. Dabei ist zu beachten, daß 1 mm³ Klebstoff etwa 50 mm³ zu verdampfenden Polystyrols entspricht. Die häufigste Lieferform für Polystyrol ist in Form von Kugeln mit einem Durchmesser von 0,2 bis 0,5 mm. Dabei liegt das Polystyrol ungeschäumt vor oder es ist in einem vorgeschäumten Zustand mit etwa 5 mm Durchmesser, wobei eine Restmenge an Treibgas in den Kugeln verblieben ist oder es wird als voll aufgeschäumter Block geliefert. Diese voll aufgeschäumten Blöcke werden dann meist durch Fräs-, Dreh-, Hobel-, Werkbänken in Form gebracht.

Die US-PS 4,816,332 beschreibt ein Verfahren zur Modellherstellung durch eine im Modell befindliche Skelettstruktur, wobei kein Einsatz in der Metallgießerei vorgesehen ist. Die Fertigung der Skelettstruktur erfordert eine erhebliche Vorarbeit.

Die US-PS 4,863,538 offenbart ein Verfahren zur Herstellung von Formen aus übereinandergeschichteten Sinterebenen. Dabei werden als zu sinterndes Material Plastik, Metall, Keramik und/oder Polymersubstanzen in Pulverform benutzt. Ein computergesteuerter Laser sintert die einzelnen Schichten so, daß dabei eine vorbestimmte Form entsteht.

Die DE-A1 30 35 825 offenbart ein Verfahren zur Oberflächenvergütung von Hartschaum-Kunststoffen durch Sintern. Wie die Modelle geformt werden bleibt außen vor. Der Einsatzzweck ist unbestimmt.

Die DE-U1 82 09 656 offenbart ein Verfahren zur thermo-mechanischen Sinterung von schäumbaren Kunststoffen. Dieses Verfahren setzt einen erheblichen Bedarf von vorgeformten Werkstoffen voraus und ist aufgrund des Werkzeugwechsels mit Stand- und Umrüstzeiten ohne Produktion belastet.

Die DE-C2 39 35 927 offenbart ein Verfahren, um mit einem Laser Spurrillen in eine aufgesinterte Polyäthylenoberfläche zu formen. Hier wird eine Oberfläche, die schon gesintert ist, geringtiefig bearbeitet. Aber es geht nicht um eine Modellbildung, sondern um Oberflächenvergütung.

Die US-PS 4,938,816 ist analog zur US-PS 4,863,538, wobei die zu sinternde Pulvermischung im Zielgebiet des Lasers abgelegt ist. Die Form erhält durch das Sintern eine höhere Dichte.

Die US-PS 4,944,817 ist analog zur US-PS 4,863,538, wobei die zu sinternde Pulvermischung verschiedene Materialien mit verschiedenen Zerfalls- oder Kondensationsverbindungstemperaturen enthält. Das Pulver ist entweder gut durchmischt oder die einzelnen Substanzen liegen geschichtet vor.

Die EP 0 542 729 ist analog zur US-PS 4,863,538 und beschreibt einen Mechanismus um das zu sinternde Pulver schichtförmig aufzutragen. Zusätzlich geht es um eine Lufttemperaturkontrolle, um das Pulver zu moderieren, während es gesintert wird.

Die JP 51 351 243 offenbart ein lichtstrahlgesteuertes Abscheiden eines dünnen hohlen Körpers durch Bestrahlen einer Oberfläche eines flüssigen lichtvulkanisierbaren Harzes. Dabei wird die abzuscheidende Form schichtweise auf die Oberfläche geschrieben. Das Harz härtet durch Polykondensation aus. Die Hohlräume werden mit Formmaterial gefüllt. Nach dem Füllen der Hohlräume werden die noch offenen Flächen in Fortsetzung des Belichtungsprozesses geschlossen und die so erhaltene Form wird im Lost-form-Verfahren für den allgemeinen Metallguß genutzt.

Die DE-C1 44 10 046 offenbart ein Verfahren zur Herstellung eines Feinguß-Urmodells durch Lasersintern. Die zwei Komponenten des Materials besitzen verschiedene Schmelzpunkte. In dem Feingußverfahren, wird auf das Modell ein Schalenmaterial aufgebracht. Dieses Schalenmaterial wird getrocknet, gegebenenfalls gebrannt, und ebenfalls zur metallgußfähigen Aushärtung gebracht. Bei diesem Aushärtungsprozeß verdampft oder schmilzt das im inneren befindliche Modell. Erst nach Aushärten des Modells wird dann die Metallschmelze eingefüllt, dabei tritt diese Metallschmelze nicht in Kontakt mit dem vorher im inneren befindlichen Modell.

Die DE-C1 195 14 740 offenbart eine Vorrichtung zur Herstellung eines dreidimensionalen Objektes durch Lasersintern.

Die DE-A1 196 19 334 offenbart ein Verfahren für Laserschweiß- oder Sintervorrichtungen, mittels mindestens zwei Laserstrahlen. Diese zwei Laserstrahlen werden aus einem einzigen Laserstrahl durch Strahlteilung hergestellt. Die beiden Laserstrahlen schneiden sich dann am Reaktionspunkt.

Die DE-U1 295 15 447 offenbart eine Vorrichtung zur Herstellung eines dreidimensionalen Objektes mittels Stereolithographie oder Lasersinterns.

Die EP 0 733 419 offenbart eine Gußeinbettmasse auf keramischer Basis für die Herstellung von Gußformen nach dem Wachsausschmelzverfahren zum Gießen von Titan und Titanlegierungen.

Die GB 895 220 offenbart eine Mischung für Formsandmaterial, wobei als Silikatbinder eine Mischung aus Methylalkohol, Methylsilikaten, Wasser und Hydrowasserstoff abgebender Säure dient.

Die GB 808 954 offenbart ein Verfahren zum Unterdruckspritzguß unter Einsatz von Schutzgas mit einer anschließenden Abkühlsteuerung. Hierbei kommen Wasserstoff und Helium als Atmosphäre zum Einsatz.

Die GB 636 947 offenbart ein Verfahren nach dem Wachsausschmelzverfahren. Hierbei werden Modelle aus Polystyren oder Polymehtylacrylat benutzt. Es geht hier zudem um eine spezielle Art Aluminiumlegierung. Die Modelle werden unter anderem aus einer Harzlösung unter Polykondensation hergestellt. Das Modell wird nach Maskenbildung ausgebrannt.

Die GB 579 327 offenbart ein Rezept für Modellsand.

Die GB 575 734 offenbart ein Formmaterial für den Metallguß in Formsand, das für eine Mehrfachnutzung vorgesehen ist.

Die JP 31 24 359 beschreibt eine Schutzgasflutsteuerungsanlage auf Thermofühlerbasis für Magnesiumformsandboxen, um durch zu hohen Schutzgasdruck bedingte Formfehler zu minimieren. Hierbei kommt das Formsandgießen nach Methode 1 zum Einsatz, wo das zu gießende Teil in den Sand eingeformt und wieder entfernt wird. Der auszufüllende Hohlraum wird dann mit Schutzgas gefüllt. Dadurch wird bei zu gießenden Magnesiumlegierungen eine Reaktion zwischen Magnesium und im Hohlraum befindlicher Luft ausgeschlossen. Allerdings ist diese Methode nicht für Lost-foam-Verfahren geeignet, da die hier auftretenden Gasdrücke durch verdampfendes Material eine Steuerung quasi unmöglich machen.

Die JP 30 94 964 beschreibt eine Schutzgaseinschließsteuerungsanlage, die druckabhängig gesteuert wird und abhängig ist von der Temperaturverteilung der einströmenden Magnesiumlegierung. Für das Formgußverfahren etc. gilt das, was bei JP 31 24 359 gesagt wurde.

Die WO 96 24 701 offenbart eine für Hochdruckpreßform beziehungsweise -guß geeignete Magnesiumlegierung, die eine geringe Kriech- und Korrosionsneigung besitzt.

Die US-PS 5,290,373 offenbart ein Verfahren zum Metallguß mittels verlorener Form, wobei die verlorene Form verdampft. Es geht hierbei um eine hypereutektische Aluminiumsilikatlegierung, bei der unter Verwendung von polymerischem Formmaterial häufig Gußfehler auftreten. Um diese Gußfehler zu reduzieren wird dieser Legierung bis zu 5 % Magnesium zugesetzt. Dieses Magnesium geht dann in eine Magnesiumdisiliziumphase über, beziehungsweise überzieht das Gußteil mit einem isolierenden Magnesiumoxidfilm. Dieser Magnesiumoxidfilm soll das Gußteil vor flüssigen Styrenen schützen, und damit die durch den Kontakt mit flüssigen Styrenen entstehenden Defekte vermindern oder verhindern.

Alle oben aufgeführten Erfindungen ermöglichen den Metallguß mit verlorener Form für Nichtmagnesiumlegierungen oder sie ermöglichen den Guß von Magensiumlegierungen, dann aber nicht mit dem Verfahren mit verlorener Form, speziell nicht mit dem Lost-foam-Verfahren.

Es stellt sich damit die Aufgabe, ein Verfahren zu entwickeln, das es ermöglicht Legierungen mit hohem Magnesiumanteil, das heißt mit Magnesiumanteilen von über 30 bis 40 %, mit dem Verfahren der verlorenen Form zu gießen, speziell mit dem Lost-foam-Verfahren.

Diese Aufgabe wird gelöst durch die Merkmale des Anspruchs 1.

Die Erfindung ermöglicht einen Einsatz des Magnesiumformgießens in der Serienfertigung. Durch das Gießen mit verlorener Form ist eine kostengünstige, schnelle Fertigung möglich. Bei diesem speziellen Lost-form-Verfahren ist durch das Verbleiben des Konturmodells im Formsand das Ausformen des Konturmodells nicht nötig. Dies spart Arbeitsschritte und Zeit und senkt so den Kostenfaktor Arbeit. Es sind zudem komplizierte magnesiumhaltige Gußformen möglich. Die Erfindung ermöglicht es, daß diese magnesiumhaltigen Gußprozesse nicht mehr auf verschiedene einzelne Gußprozesse aufgeteilt werden müssen. Die Gußstücke können in einem Stück hergestellt werden. Es sind keine aufwendigen Schweiß- oder sonstigen Arbeitsschritte zum Zusammenfügen der Einzelteile mehr nötig. Dies spart Arbeitsschritte. Es verbessert die Produktqualität, da keine Verbindungsnähte auftreten, die die Haltbarkeit des Produktes reduzieren.

Die Erfindung ermöglicht zudem eine rasche Produktentwicklung, beziehungsweise Weiterentwicklung. Die Lichtquelle, speziell ein Laser, kann ohne großen Aufwand von einer Rechenanlage gesteuert werden. Dadurch kann jeder Modellentwurf relativ schnell als Konturmodell gefertigt werden. Damit ist ein rasches Austesten der Idee am Modell möglich. Eventuell nötige Verbesserungen am bestehenden Modell, lassen sich dann am Computer korrigieren und direkt in die Serienfertigung übernehmen. Durch die Lasersinterung bzw. durch die Aushärtung der Form aus Kunstoffrohprodukten durch Licht bei direkter Formgebung, sind keine Nachbearbeitungsschritte am Konturmodell nötig. Auch das Zusammenfügen mehrerer einzelner Bestandteile zu einem Konturmodell wird überflüssig. Dies spart erheblich an Arbeitszeit und erhöht dadurch die Produktivität des einzelnen Arbeitnehmers bei reduzierten Stückkosten. Es erübrigt sich zudem die komplizierte Berücksichtigung von Klebeverbindungen bei der Verdampfungsmenge, dies erleichtert den Einformprozeß.

Der Einsatz von Magnesiumgußteilen im Fahrzeugbau kann gegenüber Aluminium nochmals zu einer deutlichen Gewichtsreduzierung des Fahrzeugs führen. Der Magnesiumguß nach dem Lost-form-Verfahren in der Serienfertigung eröffnet auch neue Einsatzgebiete zum Beispiel im Flugzeugbau, wo aufgrund der zur Zeit hohen Kosten beim Magnesiumguß vermehrt Aluminiumlegierungen zum Einsatz kommen. Diese haben allerdings ca. 30 % höhere Gewichtsanteile als ein gleichwertiges Magnesiumgußteil.

Die Probleme, die beim Gießen von Magnesiumlegierungen auftreten, treten auch bei anderen Metallen auf, die in geschmolzenem Zustand zu ähnlich heftigen Reaktionen mit Luftsauerstoff neigen. Daher ist es unter anderem vorstellbar, daß der Magnesiumlegierung Titan zugesetzt wird. Titan reagiert in geschmolzenem Zustand ebenfalls sehr heftig mit Sauerstoff. Bei solcher Magnesiumtitanlegierung wäre es dann auch möglich, den Magnesiumanteil zurückzuführen, gegebenenfalls bis nahe der Nachweisgrenze. Durch die Vergleichbarkeit der Reaktionsfreude des geschmolzenen Titans mit der von geschmolzenem Magnesium bezüglich Sauerstoffs ist das oben beschriebene Verfahren auch auf Titanlegierungen mit kleinem bis verschwindend kleinem Magnesiumanteil übertragbar.

Die Erfindung hat erkannt, daß das Gießen von Magnesiumlegierungen mit verlorener Form, speziell mit Lost-form-Verfahren, möglich ist, da die Konturmodelle aus Polystyrol, Polypropylen und Polyäthylen aus Kunststoffen hergestellt sind, die keinen Sauerstoff beinhalten. Die Erfindung hat erkannt, daß der Sauerstoff, der mit der Schmelze reagieren kann, dem Konturmodell aus einer sauerstoffhaltigen Atmosphäre zugeführt werden könnte. Dies läßt sich leicht verhindern, indem das Konturmodell in einer Atmosphäre hergestellt wird, die frei von reaktionsfähigen Sauerstoffverbindungen ist. Wobei reaktionsfähig bedeutet, daß die Magnesiumschmelze aufgrund ihrer Temperatur in der Lage ist, den eventuell in der Umgebung gebundenen Sauerstoff aus dem Molekülverband herauszulösen und zu Magnesiumoxid zu verbrennen. Es gibt allerdings Oxidverbindungen die vom Magnesium nicht aufzubrechen sind, zum Beispiel Schwefeldioxid. Daher ist Schwefeldioxid als mögliches Schutzgas einsetzbar. Ähnliches gilt laut Gießereihandbüchern auch für Kohlendioxid.

Die Erfindung sorgt nun dafür, daß sich bei der Herstellung des Konturmodells keine reaktionsfähigen Sauerstoffverbindungen ankoppeln können, beziehungsweise eventuelle Hohlräume im Konturmodell frei von reaktionsfähigen Sauerstoffverbindungen sind.

Die Erfindung hat erkannt, daß bei großen/ausgedehnteren Konturmodellen, auch bei lasergesintertem Polystyrol, Polypropylen etc. ein Gewicht von unter 20 kg/m³ Konturmodell erreichbar ist.

In Kombination mit speziell auf das Gießen von Magnesiumlegierungen abgestimmten Formsanden, und einem Einformen des Konturmodells unter Ausschluß reaktionsfähiger Sauerstoffverbindungen, ist dadurch das Gießen mit verlorener Form möglich. Weiter hat die Erfindung erkannt, daß die verdampfende Form selbst als Schutzgas wirkt.

Im folgenden wird die Erfindung anhand von Ausführungsbeispielen näher erläutert und zwar zeigen die Fig. 1 - 3 eine Ausgestaltung der Erfindung.
- Fig. 1:: Konturmodell in Formsand zum Guß eingeformt,
- Fig. 2:: Sintern des Konturmodells,
- Fig. 3:: Polyaddition/Polymerisation des Konturmodells mittels Hologramm.

Sofern im folgenden nichts anderes gesagt ist, gilt die Beschreibung stets für alle Figuren.

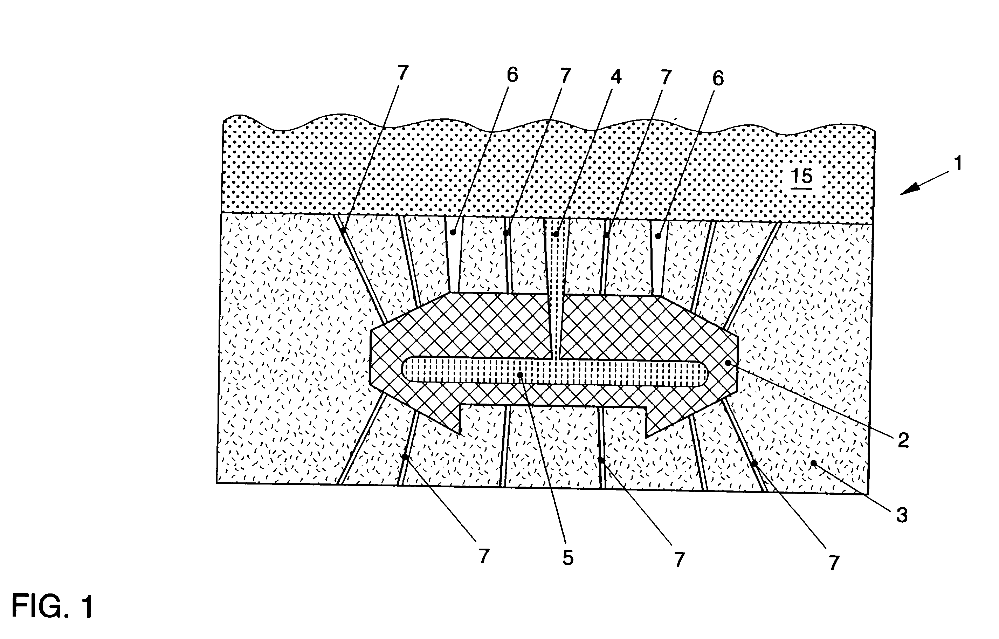

Fig. 1 zeigt einen Formbehälter 1 mit in Formsand 3 eingeformtem Konturmodell 2. Das Konturmodell 2 besteht entweder aus Polystyrolschaum (Dichte unter 20 kg/m³) oder liegt als Polystyrol-, Polypropylen-, Polyäthylenhartschalenmodell vor. Dabei ist es bei letzteren, den Hartschalenmodellen, nötig, daß diese mit Schutzgas gefüllt sind. Zur Einformungserleichterung ist es möglich, daß Lauf 5 und Speiser 6 bei den Hartschalenmodellen mit angesintert, -polymerisiert, -polyaddiert sind. Der Einguß 4 wird beim Einformen durch einen wieder entfernbaren Keil geformt. Durch diesen Einguß 4 schießt die Schmelze durch den Lauf 5 verteilt in den durch das Konturmodell 2 geschaffenen Hohlraum und steigt durch die Speiser 6 nach oben. Vorher ist das Konturmodell 2 durch die Speiser 6 und die Entgasungskanäle 7 ausgegast. Das ausgasende Material kann hierbei als Schutzgas fungieren. Während der ganzen Zeit ist der Formbehälter 1 mit Schutzgas 15 gefüllt. Der Formsand 3 ist auf die zu gießende Legierung abgestimmt. Dabei ist auch eine zusätzliche Konsistenzgebung des Formsandes 3 möglich, so daß das Konturmodellmaterial nach dem Verdampfen rasch in den Formsand aufgenommen wird.

Beim Einformen ist es zusätzlich möglich, daß der Formsand 3 mit Druckgas beaufschlagt wird, wobei diese Druckgas ein Schutzgas 15 ist. Durch diese Druckgasbeaufschlagung verhält sich der Formsand 3 wie eine Flüssigkeit. Dadurch ist es möglich, das Konturmodell 2 schwimmend in den Formsand 3 einzuformen. Zudem ist der Formsand 3 dadurch mit Schutzgas 15 gesättigt. Das anschließende Verdichten des Formsandes 3 kann dann durch eine Unterdruckbeaufschlagung des Formsandes 3 erfolgen.

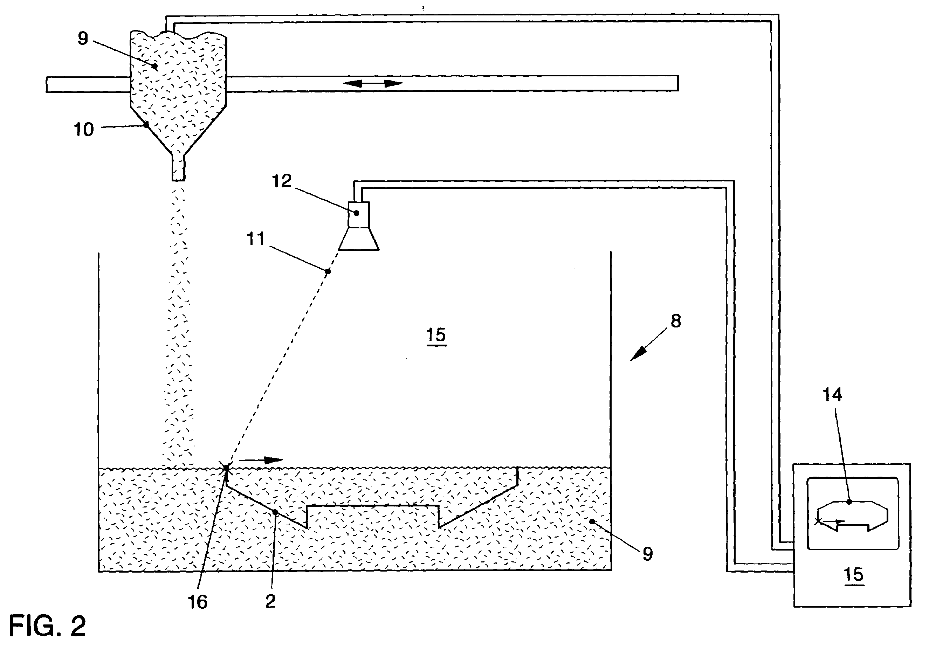

Fig. 2 zeigt einen Reaktionsbehälter 8, in dem das Konturmodell 2 aus einem Granulat 9 gesintert wird. Dieses Sintern geschieht, indem das Granulat 9 im Sinterpunkt 16 mit einem Lichtstrahl 11 beaufschlagt wird. Der Lichtstrahl 11 beschreibt einen ebenen Querschnitt des Konturmodells 2 im geschütteten Granulat 9. Im Sinterpunkt 16 sintert das Granulat 9 zu einer festen Masse. Dabei verbindet es sich mit vorhandener gesinterter Masse und/oder wird ein zukünftiger Kontaktpunkt, um dort weitere Masse anzusintern. Ist der Querschnitt des Konturmodells 2 einmal komplett in der Ebene gesintert worden, wird durch einen Schütter 10 eine neue Schicht 20 zu sinterndes Granulat 9 im Reaktionsraum 8 in einer vorbestimmten Schichtdicke 19 ausgebracht. Die Schichtdicke 19 der Schicht 20 des zu sinternden Granulats 9 bestimmt sich aus der Sinterfähigkeit der Lichtquelle 12 und der Feinheit der im jeweiligem Sintergang zu sinternden Struktur des Konturmodells 2. Der Lichtstrahl 11 stammt aus einer Lichtquelle 12, zum Beispiel einem Laser. Die Lichtquelle 12 wird von einer Rechenanlage 13 gesteuert. Die Information über das Konturmodell 2 ist als Datensatz 14 im Rechner enthalten. Dadurch ist eine rasche Produktionsumstellung durch den einfachen Austausch von Datensätzen möglich. Während der ganzen Sinterung ist der Reaktionsbehälter 8 mit einem Schutzgas 15 gefüllt. Dies gewährleistet unter anderem, daß das Konturmodell 2 als Hartschalenmodell nach dem Entfernen des überschüssigen Granulats 9 mit Schutzgas gefüllt ist.

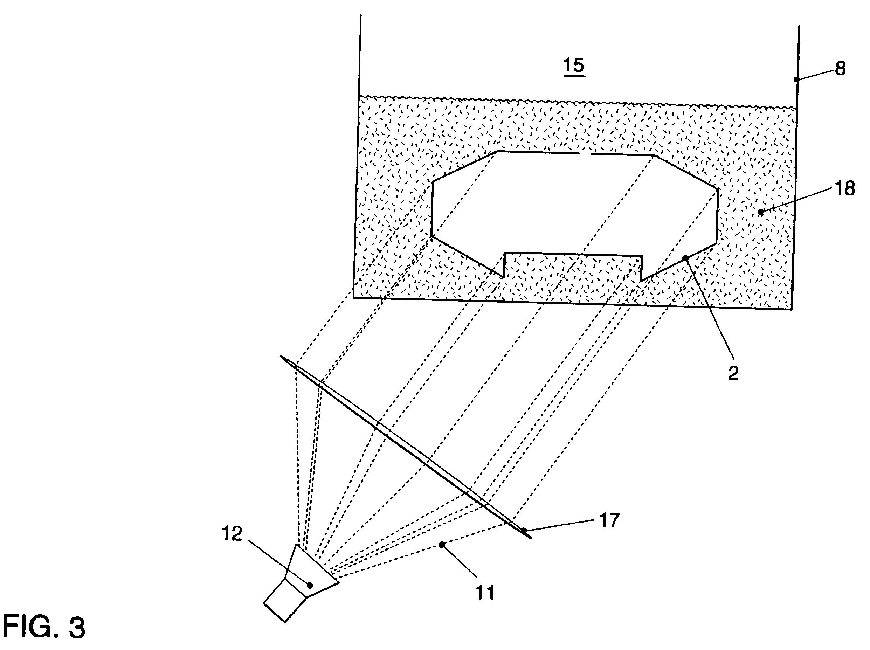

Fig. 3 zeigt einen Reaktionsbehälter 8 in dem das Konturmodell 2 aus einer Lösung 18 polymerisiert oder polyaddiert wird. Dies geschieht hier, indem die Lösung 18 mit einem Lichtmodell des Konturmodells 2 beaufschlagt wird. An den Lichtflächen polymerisiert beziehungsweise polyaddiert das Konturmodell 2 aus der Lösung.

Das Lichtmodell entsteht durch das Beaufschlagen eines Hologramms 17 mit Lichtstrahlen 11 aus einer Lichtquelle 12. Das Hologramm 17 ist vorher vom Konturmodell 2 gefertigt worden. Die Lösung 18 ist frei von mit geschmolzenem Magnesium reaktionsfähigen Sauerstoffverbindungen. Der Reaktionsbehälter 8 ist zur Sicherheit mit einem Schutzgas 15 gefüllt.

Für die Fig. 2 und 3 ist es ohne große Umstellung möglich, daß der Reaktionsbehälter 8 mit dem Formbehälter 1 identisch ist. Nach der Herstellung des Konturmodells wird das überschüssige Kunstoffrohmaterial entfernt. Der Formsand wird dann einfach nach der Herstellung des Konturmodells 2 eingefüllt.

### BEZUGSZEICHENLISTE

- 1: Formbehälter
- 2: Konturmodell
- 3: Formsand
- 4: Einguß
- 5: Lauf
- 6: Speiser
- 7: Entgasungskanäle
- 8: Reaktionsbehälter
- 9: Granulat
- 10: Schütter
- 11: Lichtstrahl
- 12: Lichtquelle
- 13: Rechenanlage
- 14: Konturmodelldatensatz
- 15: Schutzgas
- 16: Sinterpunkt
- 17: Hologramm
- 18: Lösung
- 19: Schichtdicke
- 20: Schicht

## Patentansprüche

1. Verfahren zur Herstellung von magnesiumhaltigen Metallgußteilen durch Einformen eines unter der Temperatur der einschießenden Metallschmelze verdampfbarem Konturmodell (2) aus Kunststoff in einem Formsand (3) von legierungsabhängiger Zusammensetzung, **dadurch gekennzeichnet,** daß
a) der Formsand (3) in bezug auf das zu gießende Metall frei von reaktionsfähigem Sauerstoff ist,
b) das Material des Konturmodells (2) frei von angekoppelten Sauerstoff ist.

2. Verfahren nach Anspruch 1, **dadurch gekennzeichnet,** daß die Fertigung des Konturmodells (2), das gußgemäße Einformen des Konturmodells (2) in den Formsand (3) und das Gießen der magnesiumhaltigen Legierung jeweils unter Schutzgas (15) stattfindet.

3. Verfahren nach Anspruch 1 oder 2, **dadurch gekennzeichnet,** daß das Konturmodell (2) Polystyrol enthält.

4. Verfahren nach Anspruch 1 oder 2, **dadurch gekennzeichnet,** daß das Konturmodell (2) Polypropylen enthält.

5. Verfahren nach Anspruch 1 oder 2, **dadurch gekennzeichnet,** daß das Konturmodell (2) Polyäthylen enthält.

6. Verfahren nach einem der Ansprüche 1 bis 5, **dadurch gekennzeichnet,** daß das Konturmodell (2) aus schüttgutartigen oder flüssigen Kunststoffrohprodukten hergestellt wird, welche durch lokale Beaufschlagung mit einer hinsichtlich Dauer/Intensität/Ort steuerbaren Lichtquelle (12) in endgültiger Form verfestigen.

7. Verfahren nach Anspruch 6, **dadurch gekennzeichnet,** daß die Formgebung für das Konturmodell (2) durch Sintern bzw. Polymerisation bzw. Polyaddition unter Lichteinfluß erfolgt.

8. Verfahren nach einem der Ansprüche 6 oder 7, **dadurch gekennzeichnet,** daß die Lichtquelle (12) ein Laser ist.

9. Verfahren nach einem der Ansprüche 6 bis 8, **dadurch gekennzeichnet,** daß die Modellform für das Konturmodell (2) in einer Rechenanlage (13) als Datensatz (14) vorliegt und die Lichtquelle (12) rechnergesteuert ist.

10. Verfahren nach einem der Ansprüche 6 bis 8, **dadurch gekennzeichnet,** daß das Modell für das Konturmodell (2) als Hologramm (17) vorliegt.

11. Verfahren nach einem der Ansprüche 1 bis 8, **dadurch gekennzeichnet,** daß der Magnesiumanteil an der Legierung mindestens 30 % beträgt.
